# EUROPEAN PATENT SPECIFICATION

(11) **EP 1 071 341 B1**
(45) Date of publication and mention of the grant of the patent: **13.10.2004**
(21) Application number: 99909444.4
(22) Date of filing: 04.03.1999
(51) Int. Cl.: A23L 3/00

(54) **METHOD OF MANUFACTURING AN ASEPTIC TOFU**
VERFAHREN ZUR HERSTELLUNG EINES ASEPTISCHEN TOFUS
PROCEDE DE FABRICATION D'UN TOFU ASEPTIQUE

(30) Priority: 13.03.1998 SE 9800825
(43) Date of publication of application: 31.01.2001
(73) Proprietor: Tetra Laval Holdings & Finance SA, 1009 Pully (CH)
(72) Inventor: LU, Alan Jin Lun, Singapore 650366 (SG); LIM, JuayHo, Singapore 550422 (SG); TIEN, Yeow Kong, Singapore 640825 (SG); IRWE, Sten, S-237 35 Bjärred (SE)
(74) Representative: Quintelier, Claude
(86) International application number: PCT/SE1999/000317
(87) International publication number: WO 1999/045799

(56) References cited:
- EP-A1- 0 285 795
- EP-A1- 0 546 200
- US-A- 4 514 433

## Description

The present invention relates to a method of manufacturing an aseptically packaged tofu, by means of adding a sterile coagulating agent to a sterilised liquid food product, in particular soy milk, in order to make it coagulate, wherein a first solution of a calcium chloride (CaCl2) salt and a second salt solution are each sterilised in separate flows in a first step and wherein the two sterile flows are then mixed and reacted with each other in order to form the said coagulating agent.

Such a method is known from US-A-4514433. According to the known method magnesium sulphate is used as the second salt solution. Coagulated food products may be obtained in different ways depending on the starting food material by denaturation of its proteins. In most cases a coagulating agent has to be added to the liquid in order to achieve coagulation. In some cases, heat is also needed to initiate the coagulation process. Examples of coagulated food products are cheese, puddings, jellies and desserts. As coagulating agents, for example different enzymes and/or inorganic salts may be used. When a coagulating agent is added, it reacts with the protein molecules in the liquid food and renders them insoluble, thus providing a coagulum. A specific coagulated food product called tofu is made from a protein-rich extract from soy beans, i.e. soy milk. Tofu is a traditional basic food product in many countries in Asia, e.g. Japan, China, Korea, Indonesia, Taiwan, Malaysia and Singapore, and exists in mainly two types, i.e. pressed tofu and "silken tofu". The pressed tofu has a firmer body and higher dry matter content as some "whey" has been pressed out from the curd, while the silken tofu has a softer texture. Tofu can be eaten as it is but is often further processed by frying, cooking or baking as ingredient in various dishes. Since tofu contains, from the nutritional point of view, high quality proteins and fat, it provides an important role as a basic food product in many developing countries. Even if the tofu markets in Europe and in the USA are rather limited today, it is likely that the high nutrition value of tofu will increase the consumers' interest. Furthermore, tofu has the potential to create a good environmental image since less resources are needed for its production, in comparison to animal based proteins in meat.

In the traditional production of tofu, in for example Japan, a natural product extracted from sea water called "Nigara", containing magnesium chloride (MgCl₂) as the active component, has been used as the coagulant. Tofu coagulated by Nigara is a highly appreciated product in Japan. The extraction of the coagulant is, however, both time-consuming and requires some skill, for which reason it is not considered a suitable coagulant for the large scale production of tofu. Also calcium chloride (CaCl₂) is a feasible coagulant, but is, when employed in large scale production, just like MgCl₂ considered to result in tofu of lower quality with undesired coarse/hard texture.

The mostly used and, at least in China, most popular coagulant today is calcium sulphate (CaSO₄). Tofu coagulated by CaSO₄ has a soft texture and consistency, which is highly appreciated. Furthermore, tofu has long been considered as an important basic food product for the supply of calcium, instead of dairy products, which play the corresponding role in, for example, Europe and in the USA.

Characteristic for CaSO₄ is also its low solubility in water. It has, therefore, to be added in the form of a suspension or dispersion in water.

Magnesium sulphate (MgSO₄) is a further possible alternative coagulant, which has not yet won any popularity in the manufacture of tofu. MgSO₄, just like CaSO₄, has very low solubility in water.

Traditionally manufactured and distributed tofu has a short shelf life and is in practice treated as a fresh product that needs to be used the same day or the day after it was manufactured. The increased urbanisation and centralisation of production units has led to an increased demand for tofu having increased shelf life.

Products that can be kept up to several weeks at cold storage, depending on the hygienic conditions, production process and packaging quality, are on the market today. The demand for aseptically packaged products that can be kept for longer times without cold storage and with pristine taste and quality, is, however, great in modern society distribution over longer distances and during longer periods of time.

In the production of aseptic coagulated food products, all components of the food product must be sterilised and thereafter packaged under aseptic conditions into a package which aseptically protects and maintains the properties of the product. However, for the manufacturing of such aseptic coagulated products under rational and efficient conditions on an industrial scale, one is limited to a few coagulants that may be produced in sterile form or that may be sterilised by means of rational, cost efficient sterilisation methods.

A coagulant dispersion of solid particles in a liquid medium is for example difficult to obtain in sterile form and has, therefore, up to now been excluded from the production of aseptic tofu. There have been deliberations in the direction of sterilising the highly desirable coagulant salt CaSO₄ that is normally added via a dispersion or slurry in water, by means of hot steam or heat treatment. Such sterilisation methods are, however, too energy consuming to be cost efficient and still imply a risk of insufficient sterilisation of the solid particles in eventual particle clusters in the slurry.

Methods for production of aseptic tofu are known from international application PCT/JP95/00236 or from US application serial number 08/669,921. According to these methods, other coagulants have been used which are suitable for rational large scale processes.

A well functioning example is transglutaminase, (TGase), which is an enzyme that links together and coagulates proteins also at ambient temperature (see PCT/JP95/00236). This enzyme is still very expensive, which in practice renders the costs of tofu production too high.

Another well functioning example is glucone-delta-lactone (GDL) (US serial number 08/669,921), which however, gives a characteristically acidic taste to the tofu and which most preferably should be used together with other sterilisable coagulants, for example a water soluble salt such as MgCl₂.

Thus, in the prior art there is no possibility to produce aseptic coagulated food products by the use of coagulants in the form of a dispersion or suspension of solid particles in a liquid medium. In particular, there is a need for the production of tofu in the traditional way, but under aseptic conditions, by means of CaSO₄ as the coagulant in order to obtain the desirable traditional properties of consistency, texture and taste.

One object of the present invention is, therefore, to provide a new method of the type disclosed by way of introduction without the problems inherent in the prior art.

Another object of the present invention is to provide a new method for aseptically coagulating a food product by means of a liquid medium containing a solid inorganic salt as the coagulant.

These objects are attained by the method having the characterising features of claim 1. Preferred variations and modifications of the method according to the invention have the features of subclaims 2 to 8.

A typical protein containing liquid food product for the transformation into a coagulated food product is, thus, the extract from soy beans, i.e. soy milk. In order to extract the proteins from soy beans, the beans are soaked in water for some hours. Different soaking times and soaking methods, for example by using hypochloride, may be used, depending on the purity and quality of the beans. The soaking water is removed, whereafter the beans are ground or crushed to a slurry of mashed beans called "go". During the crushing and grinding operation some kind of antifoaming agent may be added.

The soy bean slurry is thereafter heated to about 90-110, preferably about 95-105 and most preferably about 100°C, during about 1-10 minutes, preferably 2-6 minutes. The heat treated or cooked paste is deaerated, whereafter the fibrous rests from the beans, so called "okara" are separated and removed from the soy milk.

The extracted soy milk can be stored for a shorter time or immediately further processed for production of tofu, by means of homogenisation and following heat treatment at high temperature, i.e. so called UHT sterilised. Homogenisation can take place in one or several steps at different pressures in order to obtain an even homogenous product. The sterilising treatment is performed at about 130-145°C during about 1-20 seconds, preferably at about 134-140°C during about 2-10 seconds, most commonly by means of indirect heat exchange such as for example in a plate heat exchanger. A choice of a lower sterilisation temperature can be compensated for by longer holding time at the temperature. For example, a sterilisation temperature of approximately 130-135°C could require a holding time of about 8 - 24 seconds.

Heating up to the sterilisation temperature can take place in one or several pre-heating steps. For example, suitable equipment for the aseptic treatment of a liquid food product may be of the type "Tetra Therm Aseptic"®.

The heat treated product is then cooled to preferably between 5-20°C. Cooling can take place in one or more, preferably two, steps. The cooled aseptic milk can temporarily be stored in a buffer tank or directly be transferred to aseptic processing for the addition of coagulant, filling and packaging.

The sterile coagulant in the form of an inorganic solid salt dispersed in a liquid medium is carefully dosed and added to the soy milk under aseptic conditions, for example by means of an aseptic dosing equipment of the type "Tetra Aldose" ®. The coagulant and the soy milk are thoroughly mixed by means of a static in-line mixer, whereby a homogenous mixture is obtained.

The homogenous mixture is packed in an aseptic packaging machine, for example of the type "Tetra Brik Aseptic"®, in a continuous process for forming, filling and sealing of the packages.

The packed soy milk coagulates into tofu inside the sealed packages during a subsequent incubation process, whereby the content of the packages are heated to a suitable temperature in order to initiate the coagulation process. Normally the content of the packages is heated to about 70-95, preferably 80-90°C, during about 30-60, preferably about 40-50 minutes. Heating for coagulation may be performed by well-known technologies, such as for example by means of water baths or microwave technology.

After the incubation the packages must be cooled to ambient temperature rather quickly to prevent spoiling the product. The aseptically packaged tofu may then be stored at ambient temperature for at least half a year and up to about one year, depending on the type of package employed.

The coagulant is, thus, prepared under sterile conditions in a special process stage before it is dosed and added to the liquid food product. A first flow of a solution containing a first inorganic salt and a second flow of a solution containing a second inorganic salt are each separately sterilised and then mixed in order to react the first and second inorganic salt solutions with each other, in order to form a solid inorganic salt having coagulation effect. Sterilisation may take place by means of known technologies, such as, for example, microfiltration technology through porous membranes or by means of heat sterilisation. The salt solutions may be mixed and reacted with each other in a separate operation, whereafter the thus formed, solid coagulant salt is added to the liquid food. Alternatively, the two solutions may be added directly to the liquid food and be simultaneously mixed and reacted with each other.

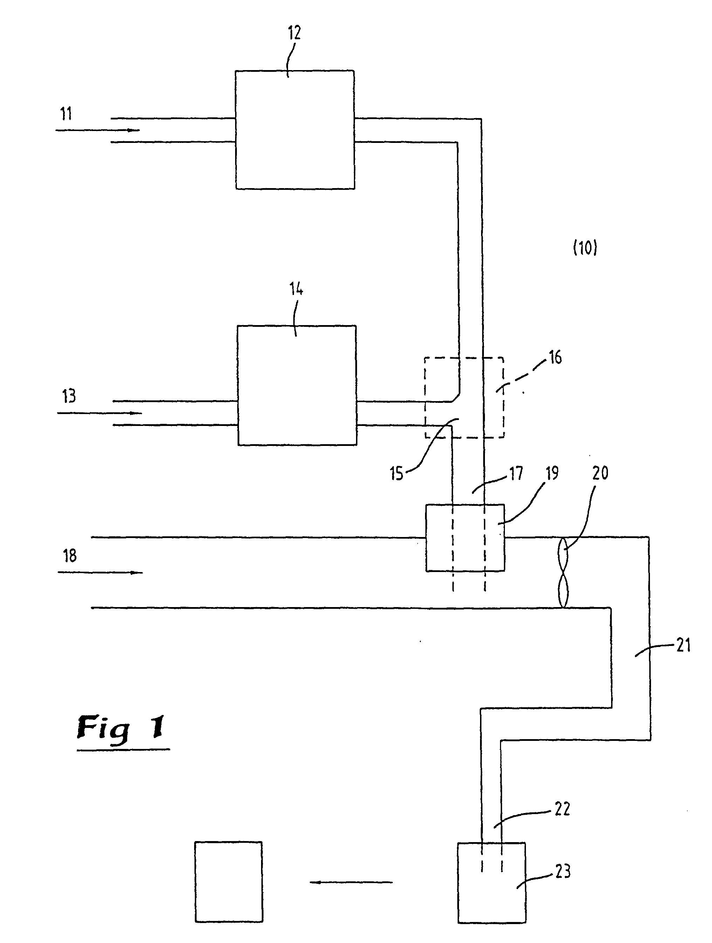

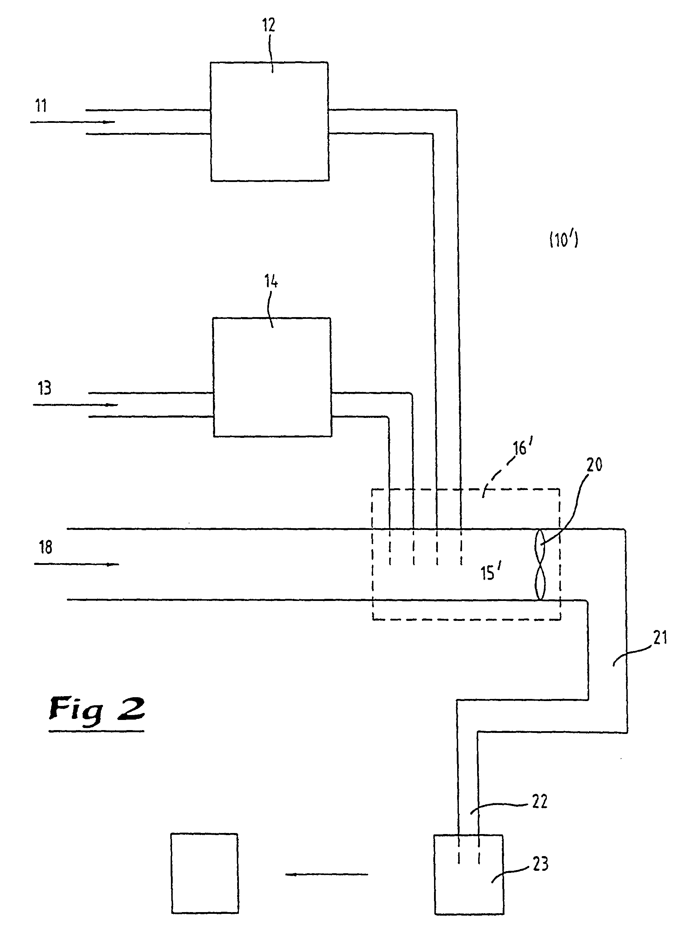

The invention will hereafter be described with reference to accompanying Figures 1 and 2, which schematically show two alternative embodiments of a method to prepare and add a sterile coagulant to a liquid food product, such as for example soy milk.

Figure 1 shows, thus, a method and equipment 10 for sterile preparation and packaging of a coagulated food product by separately sterilising a first flow of a solution containing a first inorganic salt and a second flow of a solution containing a second inorganic salt, subsequent mixing and reacting the two salt solutions with each other in order to provide a solid inorganic salt coagulant as a dispersion or slurry in a liquid medium, and final dosing and addition of the liquid medium to the liquid food product.

A first flow 11 of an aqueous solution containing a first inorganic salt, CaCl₂, is sterilised preferably by means of microfiltration through a microfilter 12 having a filtration pore size such that bacteria and other micro-organisms are filtered off from the salt solution. A second flow 13 of an aqueous solution containing a second inorganic salt K₂SO₄, is sterilised in the same way preferably by means of microfiltration through a microfilter 14. The two sterilised salt solution flows are dosed together in equal or corresponding amounts, whereby the ions from the two salts stoichiometrically react with each other, thus forming a salt, CaSO₄.

CaSO₄ precipitates from the solution into solid phase, since it has a lower solubility in water than the two starting product salts, which are readily soluble in water.

The dissolved salt ions in the first and second flow, immediately react with each other when the two flows are mixed, for which reason the reaction can take place directly in-line by simply converging the two flows 15. Alternatively, mixing can take place in a separate tank 16 in order to make sure that all ions have reacted into CaSO₄ and KCl before the total flow is further transferred in the process. The total flow 17 of CaSO₄ and KCl in water, in the form of a slurry or dispersion, is thereafter dosed into a greater flow 18 of soy milk by means of a suitable dosing equipment 19. The dosage of coagulant slurry into the tofu preferably is such that the amount of CaSO₄ added is about 0.1-1.0 weight-%, more preferably about 0,5-0,7 weight-% of the soy milk. For most optimal coagulation result the amount of CaSO₄ added is about 0.6 weight-% of the soy milk. In order to achieve a homogeneous mixture of coagulant dispersion and soy milk, these are mixed by a stirrer, preferably of the static mixer type 20, situated in the total flow 21 from soy milk 18 and coagulant dispersion 17, or alternatively in a separate mixing vessel (not shown), thus continuously producing a product ready to be filled at 22. The obtained product is filled under aseptic conditions into packages 23, which are sealed and transported to an incubation stage for coagulation at about 90° C in the filled product during about 40 minutes and thereafter cooled at about 25° C during about 20 minutes. Heating and cooling of the filled packages may be performed using well known technology, such as for example by means of water baths or by means of microwave heating, depending on the type of package employed.

Figure 2 shows a further embodiment of the method and equipment 10' for sterile preparation and packaging of an aseptic coagulated food product by separately sterilising a first flow of a solution containing a first inorganic salt and a second flow of a solution containing a second inorganic salt, and then directly dosing and adding the two flows to the liquid food product, whereby the two salts are mixed and reacted with each other in order to provide a solid inorganic salt coagulant at the same time as the thus formed solid salt is mixed with the liquid food.

A first flow 11 of an aqueous solution containing a first inorganic salt such as, for example, CaCl₂, is sterilised preferably by means of microfiltration through a microfilter 12, having a filtration pore size such that bacteria and other microorganisms are filtered off from the salt solution. A second flow 13 of an aqueous solution containing a second inorganic salt such as, for example K₂SO₄, is preferably sterilised in the same way by means of microfiltration through a microfilter 14. The two sterilised salt solution flows are dosed and added to a flow 18 of soy milk by means of suitable dosing equipment 19 (not shown in the Figure) in corresponding amounts, enabling the ions from the two salt solutions stoichiometrically to react with each other, thus forming a salt, CaSO₄.

CaSO₄ precipitates from the solution into solid phase since it has a lower solubility in water than the two starting product salts which are readily soluble in water. The resulting CaSO₄ salt then acts as a coagulant in the tofu slurry.

The dissolved salt ions in the first and second flow immediately react with each other when the two flows are mixed, for which reason the reaction can take place directly in-line by simply converging the two flows together with the tofu slurry 15'. Alternatively, mixing of the two sterile flows 11, 13 with the tofu slurry 18 can take place in a separate mixing vessel 16' in order to ensure that all ions have reacted into CaSO₄ and KCl before the total flow 21 is further transferred in the process. In order to achieve a homogeneous mixture of coagulant dispersion and soy milk, these are mixed by a stirrer, preferably of the static mixer type 20, situated in the total flow 21 from soy milk 18 and coagulant dispersion or in the vessel 16', thus continuously producing a product ready to be filled into packages, at 22. The thus obtained product is filled under aseptic conditions into packages 23 which are sealed and transported to an incubation stage for coagulation at about 90°C (of the filled product) during about 40 minutes and thereafter cooled at about 25°C during about 20 minutes. Heating and cooling of the filled packages may be performed using well-known techniques, such as, for example, by means of water baths or by means of microwaves, depending upon the type of package employed.

It should be observed that the two Drawings in Figs. 1 and 2 are merely schematic whose purpose is to clarify the method according to the invention and should not be interpreted concerning relative size proportions between flows, sterilisation- or mixing vessels and packages.

The invention provides a method for aseptically coagulating soy milk into tofu by means of an aqueous dispersion containing CaSO₄ as disclosed in claim 1.

## Claims

1. A method of manufacturing an aseptically packaged tofu, by means of adding a sterile coagulating agent to a sterilised liquid food product, in particular soy milk, in order to make it coagulate, wherein a first solution of a calcium chloride (CaCl2) salt and a second solution of a potassium sulphate salt (K2S04) are each sterilised in separate flows in a first step and wherein the two sterile flows are then mixed and reacted with each other in order to form the said coagulating agent, said coagulating agent is in the form of a slurry or a dispersion in water comprising potassium chloride (KCl) and wherein calcium sulphate (Ca S04) precipitates into solid phase.

2. A method as claimed in claim 1, **characterised in that** said coagulant agent is dosed into said product in such a manner that the amount of calcium sulphate (Ca SO4) added is about 0.1-1.0 weight %, more preferably about 0.5-0.7 weight %.

3. The method according to claim 1 or 2, **characterised in that** said flows of first and second salt solutions, after the sterilisation, are mixed and reacted with each other, thus providing a liquid medium containing a solid inorganic salt dispersed therein, and that the liquid medium is thereafter added to the liquid food product.

4. The method according to claim 1, **characterised in that** said flows of first and second salt solutions, after the sterilisation, are added to the liquid food product whereby the two salt solutions are mixed and reacted with each other, thus providing a sterile coagulating agent, and simultaneously mixed with the liquid food product.

5. The method according to any one of claims 1 to 4, **characterised in that** the first and second flows of salt solutions are sterilised by means of microfiltration technology.

6. The method according to any one of the preceding claims, **characterised in that** said solutions and liquid medium, respectively, comprise water.

7. The method according to any one of the preceding claims, **characterised in that** the liquid food product is based on proteins.

8. The method according to any one of the preceding claims, **characterised in that** the liquid food product comprises extract from soy beans.

## Patentansprüche

1. Ein Verfahren zur Herstellung eines aseptisch verpackten Tofus, durch Zugabe eines sterile Gerinnungsmittels zu einem sterilisiertem flüssigen Nahrungsmittelerzeugnis, insbesondere Sojamilch, um dessen Gerinnung zu bewirken, wobei eine erste Lösung eines Calciumchlorid- (CaCl2) salzes und eine zweite Lösung eines Kaliumsulfat- (K2SO4) salzes jeweils in gesonderten Strömen in einem ersten Schritt sterilisiert werden und wobei die zwei sterilen Ströme dann miteinander vermischt und umgesetzt werden, um das Gerinnungsmittel zu bilden, wobei das Gerinnungsmittel in der Form einer Aufschlämmung oder Suspension in Wasser vorliegt, welche Kaliumchlorid (KCI) enthält, und wobei Calciumsulfat (CaSO4) in die feste Phase ausfällt.

2. Ein Verfahren wie in Anspruch 1 beansprucht, **dadurch gekennzeichnet dass** das Gerinnungsmittel so in das Erzeugnis dosiert wird, dass die Menge des zugefügten Calciumsulfats (CaSO4) ungefähr 0,1-1,0 Gewichts% beträgt, bevorzugter ungefähr 0,5-0,7 Gewichts%.

3. Das Verfahren gemäß Anspruch 1 oder 2, **dadurch gekennzeichnet dass** die Ströme der ersten und zweiten Salzlösungen nach der Sterilisation miteinander vermischt und umgesetzt werden, so ein flüssiges Medium bereitstellen, das ein darin dispergiertes festes anorganisches Salz enthält, und dadurch dass das flüssige Medium danach dem flüssigen Nahrungsmittelerzeugnis zugefügt wird.

4. Das Verfahren gemäß Anspruch 1, **dadurch gekennzeichnet dass** die Ströme der ersten und zweiten Salzlösungen nach der Sterilisation dem flüssigen Nahrungsmittelerzeugnis zugefügt werden, wobei die zwei Salzlösungen miteinander vermischt und umgesetzt werden, so ein steriles Gerinnungsmittel bereitstellen und gleichzeitig mit dem flüssigen Nahrungsmittelerzeugnis gemischt werden.

5. Das Verfahren gemäß einem der Ansprüche 1 bis 4, **dadurch gekennzeichnet dass** die ersten und zweiten Ströme von Salzlösungen durch Mikrofiltrationstechnologie sterilisiert werden.

6. Das Verfahren gemäß einem der vorhergehenden Ansprüche, **dadurch gekennzeichnet dass** die Lösungen beziehungsweise das flüssige Medium Wasser enthalten.

7. Das Verfahren gemäß einem der vorhergehenden Ansprüche, **dadurch gekennzeichnet dass** das flüssige Nahrungsmittelerzeugnis auf Proteinen basiert.

8. Das Verfahren gemäß einem der vorhergehenden Ansprüche, **dadurch gekennzeichnet dass** das flüssige Nahrungsmittelerzeugnis einen Extrakt aus Sojabohnen enthält.

## Revendications

1. Procédé de fabrication d'un tofu emballé de manière aseptique recourant à l'ajout d'un agent de coagulation stérile à un produit alimentaire liquide stérilisé, en particulier du lait de soja, afin de le faire coaguler, dans lequel une première solution d'un sel de chlorure de calcium (CaCl₂) et une deuxième solution d'un sel de sulfate de potassium (K₂SO₄) sont respectivement stérilisées dans des courants séparés au cours d'une première étape et dans lequel on mélange ensuite les deux courants stériles et on les fait réagir l'un avec l'autre afin de former ledit agent de coagulation, ledit agent de coagulation se présentant sous la forme d'une suspension ou d'une dispersion dans l'eau contenant du chlorure de potassium (KCI) et dans lequel le sulfate de calcium (CaSO₄) précipite en phase solide.

2. Procédé comme revendiqué dans la revendication 1, **caractérisé en ce que** ledit agent de coagulation est dosé dans ledit produit de telle manière que la quantité de sulfate de calcium (CaSO₄) ajoutée représente environ 0,1 ― 1,0 % en poids, de préférence environ de 0,5-0,7% en poids.

3. Procédé selon la revendication 1 ou 2, **caractérisé en ce qu'**après stérilisation, on mélange lesdits courants des première et deuxième solutions salines et on les fait réagir l'un avec l'autre, ce qui donne un milieu liquide contenant un sel inorganique solide dispersé dans celui-ci, et **en ce qu'**on ajoute ensuite le milieu liquide au produit alimentaire liquide.

4. Procédé selon la revendication 1, **caractérisé en ce qu'**après stérilisation, on ajoute lesdits courants des première et deuxième solutions salines au produit alimentaire liquide, ce qui mélange les deux solutions salines et les fait réagir l'une avec l'autre, donnant ainsi un agent de coagulation stérile, et on les mélange en même temps avec le produit alimentaire liquide.

5. Procédé selon une quelconque des revendications 1 à 4,
**caractérisé en ce que** les premier et deuxième courants de solutions salines sont stérilisés au moyen d'une technologie de microfiltration.

6. Procédé selon une quelconque des revendications précédentes, **caractérisé en ce que** lesdites solutions et ledit milieu liquide contiennent respectivement de l'eau.

7. Procédé selon une quelconque des revendications précédentes, **caractérisé en ce que** le produit alimentaire liquide est à base de protéines.

8. Procédé selon une quelconque des revendications précédentes, **caractérisé en ce que** le produit alimentaire liquide contient de l'extrait de soja.
